(19) Europäisches Patentamt
European Patent Office
Office européen des brevets

(11) Publication number: 0 024 881
B1

(12) # EUROPEAN PATENT SPECIFICATION

(45) Date of publication of patent specification: 14.09.83

(51) Int. Cl.[3]: C 08 F 10/02, C 08 F 4/62

(21) Application number: 80302878.6

(22) Date of filing: 20.08.80

(54) **Process for producing polyethylene by continuous multi-stage polymerization and moulded articles made from the product.**

(30) Priority: 20.08.79 JP 105657/79
23.08.79 JP 107530/79

(43) Date of publication of application:
11.03.81 Bulletin 81/10

(45) Publication of the grant of the patent:
14.09.83 Bulletin 83/37

(84) Designated Contracting States:
DE FR GB IT

(56) References cited:
FR - A - 1 584 855
GB - A - 1 496 440

The file contains technical information submitted after the application was filed and not included in this specification

(73) Proprietor: Chisso Corporation
6-32, Nakanoshima 3-chome Kitaku
Osaka-shi Osaka-fu (JP)

(72) Inventor: Harada, Masato
762-11, Ohkubo
Kisarazushi Chibaken (JP)
Inventor: Ishigaki, Yoshikatsu
17, Tatsumidai-higashi 2-chome
Ichiharashi Chibaken (JP)
Inventor: Yamada, Sadahiko
2-4, Wakamiya 7-chome
Ichiharashi Chibaken (JP)
Inventor: Suzuki, Atsushi
633, Futsukaichiba
Ichiharashi Chibaken (JP)
Inventor: Masuda, Jun
17, Tatsumidai-higashi 2-chome
Ichiharashi Chibaken (JP)

(74) Representative: Ruffles, Graham Keith et al,
MARKS & CLERK 57-60 Lincoln's Inn Fields
London WC2A 3LS (GB)

EP 0 024 881 B1

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

# Process for producing polyethylene by continuous multi-stage polymerization and moulded articles made from the product

This invention relates to a process for producing polyethylene by a continuous multi-stage polymerization process.

The polyethylene can be ethylene homopolymer or also a copolymer of ethylene with a small amount (say 10 mol % or less) of one or more other $\alpha$-olefins e.g. propylene, buten-1, hexene-1, 4-methyl-pentene-1 or dienes e.g. butandiene, cyclopentadiene, copolymerizable with ethylene.

For the main application fields for polyethylene, extrusion moulding and blow moulding, polyethylene having a high molecular weight (low melt index), adequate strength and easy processability have been needed. Low melt index polyethylene usually has superior strength but has however a drawback in that it has inferior fluidity at the time of moulding. As a means for solving this problem, a process of broadening the molecular weight distribution has been employed. Thus, polyethylene of narrow molecular weight distribution is suitable for injection moulding, whereas a broad molecular weight distribution is desirable for polyethylene employed for extrusion moulding and blow moulding. When polymers of narrow molecular weight distribution are subjected to blow moulding, the extrusion pressure at the point of moulding increases excessively, resulting in the infeasibility of moulding or the occurrence of streaks, pockmarks, melt fracture or the like which notably harms the appearance of the product. In the case of extrusion moulding, excessive elevation of extrusion pressure, increase in the moulding instability, etc, have a deleterious effect upon the resulting product, notably to reduce its commodity value. In order to solve these various problems, if the molecular weight distribution of polymer is broadened, then the productivity at the time of processing will be improved and a product having a superior appearance will be obtained.

Various processes for broadening the molecular weight distribution are available, such as the addition of a third component to the polymerization system, the use of two kinds of organoaluminium compound as one catalyst component in admixture, the use of a catalyst having various polymerization active points, etc. However by these processes it is not always easy to produce polymers having a sufficiently broad molecular weight distribution. In such a situation, as a means for broadening the molecular weight distribution to a large extent and yet adjusting it to a desired range, multistage polymerization processes have been proposed; none of these have so far been satisfactory. For example, Japanese patent application laid-open No. 47079/1976 discloses a continuous multistage polymerization process comprising preparing a lower molecular weight polymer in the first stage employing a catalyst consisting of a combination of a supported catalyst component with an organoaluminium compound, once releasing gas in the polymerization system and preparing a higher molecular weight polymer in the second stage. The above method, however, has a drawback in that it relies on a high temperature dissolution polymerization at a polymerization temperature of 120 to 250°C and in particular a large amount of solvent is needed since it is necessary to use solvent in an amount sufficient for dissolving polymer. Further, Japanese patent publication No. 42716/1973 discloses a process of carrying out a first stage polymerization, thereafter releasing gas in the vapour phase by opening the polymerization system and then carrying out a second stage polymerization under newly reestablished polymerization conditions. Such a batch manner is much inferior in polymerization productivity.

Further, production processes for multi-stage polymerization are known from Japanese patent publication No. 11349/1971, Japanese patent application laid-open Nos. 7488/1979 and 32588/1979 which involve preparing a higher molecular weight polymer in the first stage and preparing a lower molecular weight polymer in the second stage. The Japanese patent publication No. 11349/1971 discloses a polymerization in the presence of a catalyst consisting of a combination of a trivalent titanium compound which does not need to be supported on a carrier, with an organoaluminium compound, in an inert solvent under a pressure of 10 $kg/cm^2$ (gauge) or lower. However, according to this process, the catalyst is restricted to the trivalent titanium compound, and moreover the polymerization pressure disclosed therein as an embodiment is 6 $kg/cm^2$ (gauge) or lower. Under such low polymerization pressures, the productivity of polymer is very low. Moreover, the process is a discontinuous one and there is no concrete description as to a commercially advantageous continuous process. The Japanese patent application laid-open No. 7488/1979 discloses a process of carrying out the first stage polymerization with a supported catalyst and in conditions where the polymerization vessel is filled with liquid, but by this method it is very difficult to adjust the molecular weight of polymer. The Japanese patent application laid-open No. 32588/1979 discloses a process of forcibly feeding an inert gas into the polymerization vessel of the first stage in order to elevate the total pressure and preparing a higher molecular weight polymer in the first stage polymerization, while preparing a lower molecular weight polymer in the second stage polymerization, but this process has a drawback that a large amount of inert gas fed into the first stage polymerization vessel flows into the second stage polymerization vessel, as it is, without being removed, to make difficult the preparation of sufficiently low molecular weight polymer.

On the other hand, the present inventors have studied a catalyst component wherein a reaction product (often referred to hereinafter as solid product (I)) of a trivalent metal halide with a divalent metal-containing compound (e.g. hydroxide, oxide, carbonate, a composite compound containing such a compound(s) or a hydrate of a divalent metal compound) is employed as carrier, and have found that when a catalyst is employed consisting of a combination with an organoaluminium compound of a solid product (II) prepared from such a solid product (I), a polysiloxane and a transition metal compound, then the drawbacks of conventional continuous multi-stage polymerization can be overcome.

The present invention resides in a process for producing polyethylene by continuous multi-stage polymerization. The process comprises polymerizing ethylene using a combination of the following polymerization steps (a) and (b), in the presence of a catalyst obtained by a particular reaction.

Specifically, the catalyst is obtained by reacting a trivalent metal halide with a divalent metal-containing compound which is a divalent metal hydroxide, oxide or carbonate or a composite compound containing such a compound or a hydrate of a divalent metal compound, to obtain a solid product (I); mixing this solid product (I) with a polysiloxane and a compound of a transition metal of Group IV*a* or V*a* of the Periodic Table; reacting the mixture to obtain a solid product (II) comprising the supported transition metal compound; and combining this solid product (II) with an organoaluminium compound, thereby giving the catalyst.

The catalysts of this invention are thus similar to those described in UK Patent Specification No. 1496440, and the interested reader is referred to that Specification.

In the polymerization step (a) of this invention ethylene in an amount of 30 to 80% of the total amount of ethylene fed in the multi-stage polymerization is polymerized in a saturated hydrocarbon solvent, in conditions where a gas phase is present in the upper part of the polymerization vessel, at a polymerization temperature of 50°C to less than 120°C, under a polymerization pressure of 5 to 70 kg/cm$^2$ (gauge), while hydrogen is fed in so that the molar ratio of ethylene to hydrogen in the gas phase in the upper part of the polymerization vessel is in the range above 1:0.5 up to 1:6.0. The polymerization system of this stage is referred to hereinafter as polymerization system L.

In the polymerization step (b), ethylene in an amount of 20 to 70% of the total amount of ethylene fed in the multi-stage polymerization is polymerized in a saturated hydrocarbon solvent, in conditions where a gas phase is present in the upper part of the polymerization vessel, at a polymerization temperature of 30° to 100°C, under a polymerization pressure of 5 to 70 kg/cm$^2$ (gauge), while hydrogen is fed so that the molar ratio of ethylene to hydrogen in the gas phase in the upper part of the polymerization vessel is in the range of 1:0.001 to 1:0.5. The polymerization system of this stage is referred to hereinafter as polymerization system H.

Further, if necessary or desired, one or more of the above-mentioned $\alpha$-olefins or diolefins copolymerizable with ethylene can be fed to the polymerization system (L) and/or polymerization system (H) to produce copolymer of ethylene with the $\alpha$-olefin or diolefin, using a small amount relative to the amount of ethylene fed. In this case, the molar ratio for the total of ethylene and the olefin or diolefin to that of hydrogen may be in the ranges given for ethylene to hydrogen for the stages (a) and/or (b). The above-mentioned small amount is conveniently 10% by mol or less, based on ethylene.

In the production process of the present invention, a lower molecular weight polymer is formed in the polymerization system (L) and a higher molecular weight polymer is formed in the polymerization system (H). The order of the combination of (L) with (H) is not critical. Namely, one can use a continuous multi-stage polymerization process wherein the polymerization step (a) is carried out first and the polymerization step (b) is then carried out (this process will be hereinafter referred to as continuous multi-stage polymerization (LH)), or the one wherein the polymerization step (b) is carried out first and the polymerization step (a) is then carried out (this process will be hereinafter referred to as continuous multi-stage polymerization (HL)). The order of these steps may be adequately decided depending on a necessity; in this invention when either step is carried out first, polymers having almost the same quality can be obtained.

In the continuous multi-stage polymerization (LH), polymerization is initiated by feeding catalyst to the first stage polymerization system (L), and carried out in a saturated hydrocarbon solvent, in conditions where a gas phase is present in the upper part of polymerization vessel, at a polymerization temperature of 50°C or higher and lower then 120°C, preferably 70° to 100°C, and under a polymerization pressure of 5 to 70 kg/cm$^2$ (gauge), preferably 10 to 50 kg/cm$^2$ (gauge). The molecular weight of polymer formed is adjusted by feeding ethylene and hydrogen so that the molar ratio of ethylene to hydrogen in the upper part of polymerization vessel falls in the range of above 1:0.5 up to 1:6.0. The molecular weight of the resulting polymer is typically in the range of $2\times10^4$ to $2\times10^5$ in terms of weight average molecular weight ($M_w$). The amount of polymer

formed is adjusted by feeding ethylene in an amount of 30 to 80% of the total amount of ethylene fed.

After completion of the first stage polymerization with the polymerization system (L), polymer suspended in the solvent is preferably led to a lower pressure zone at 0.1 to 30 kg/cm$^2$ (gauge) where having left the polymerization system (L) at least a portion of the hydrogen and unreacted monomer dissolved in above solvent is withdrawn to the outside of the system. At least a portion of removed hydrogen and unreacted monomer can be returned to the polymerization system (L) and reused therein. The abovementioned lower pressure zone is usually provided midway between the respective stages, but it is possible to incorporate the zone into either one of the two polymerization systems. The pressure drop between the polymerization system (L) and the lower pressure zone is determined by the amount of hydrogen required in the subsequent polymerization system (H).

The resulting polymer suspended in the solvent from which almost all of hydrogen has been removed is led to the second stage polymerization system (H) using a transfer means such as a transfer pump. Polymerization is carried out in conditions where a gas phase is present in the upper part of the polymerization vessel, at a newly established polymerization temperature of 30° to 100°C, preferably 40° to 90°C, under a polymerization pressure of 5 to 70 kg/cm$^2$ (gauge), preferably 10 to 50 kg/cm$^2$ (gauge). The molecular weight of the resulting polymer is adjusted by feeding ethylene and hydrogen so that the molar ratio of ethylene to hydrogen falls in the range of 1:0.001 to 1:0.5. The molecular weight of the resulting polymer is typically in the range of $2\times10^5$ to $8\times10^5$ in terms of weight averge molecular weight. The amount of polymer formed is adjusted by feeding ethylene in an amount of 20 to 70% of the total amount of ethylene fed. The molecular weight of the polymer obtained in the second stage is usually controlled only by hydrogen dissolved in the solvent, but it is also possible to use a feed of fresh hydrogen.

The other continuous multi-stage polymerization (HL) is initiated by feeding catalyst to the first stage polymerization system (H). This polymerization is carried out in a saturated hydrocarbon solvent, in conditions where a gas phase is present in the upper part of polymerization vessel, at a polymerization temperature of 30° to 100°C, preferably 40° to 90°C and under a polymerization pressure of 5 to 70 kg/cm$^2$ (gauge), preferably 8 to 70 kg/cm$^2$ (gauge), more preferably 11 to 50 kg/cm$^2$ (gauge). The molecular weight of the resulting polymer is adjusted by feeding ethylene and hydrogen so that the molecular ratio of ethylene to hydrogen in the upper part of polymerization vessel falls in the range of 1:0.001 to 1:0.5. The molecular weight of the polymer is in the range of $2\times10^5$ to $8\times10^5$ in terms of weight average molecular weight. The amount of polymer formed is adjusted by feeding ethylene in an amount of 20 to 70% of the total amount of ethylene fed.

Successively, the polymer obtained in the first stage polymerization system (H) is transferred as it is suspended in the solvent to the second stage polymerization system (L). At that time, if necessary, it may be transferred after separation of other components such as hydrogen. The transfer is carried out by means of a forced transfer means, such as a transfer pump. The second stage polymerization system (L) is employed for polymerization in conditions where a gas phase is present in the upper part of the polymerization vessel at a newly established polymerization temperature of 50° to 120°C, preferably 70° to 100°C and a polymerization pressure of 5 to 70 kg/cm$^2$ (gauge), preferably 8 to 70 kg/cm$^2$ (gauge), more preferably 11 to 50 kg/cm$^2$. The molecular weight of polymer formed is adjusted by feeding ethylene and hydrogen so that the molecular ratio of ethylene to hydrogen falls in the range of above 1:0.5 up 1:6.0. The molecular weight of the resulting polymer is in the range of $2\times10^4$ to $2\times10^5$ in terms of weight average molecular weight. The amount of polymer formed is adjusted by feeding ethylene in an amount of 30 to 80% of the total amount of ethylene fed.

The catalyst feed is usually carried out only to the first stage polymerization system, but it is also possible to carry out the feed to the second stage polymerization system, if necessary.

In the present invention, the molar ratio of ethylene to hydrogen in the gas phase part in the polymerization systems (L) and (H), and the amount of ethylene fed is determined depending on the application field for the polymer product.

For example, where polyethylene for film is desired, the conditions of the polymerization system (L) are as follows: the molar ratio of ethylene to hydrogen is preferably 1:1.0 to 1:5.0, more preferably 1:1.5 to 1:4.0, and the amount of ethylene fed is 40 to 60%, preferably 50% of the total amount of ethylene fed. On the other hand, the conditions of the polymerization system (H) are as follows: the molar ratio of ethylene to hydrogen is preferably 1:0.001 to 1:0.3, more preferably 1:0.005 to 1:0.2, and the amount of ethylene fed is 40 to 60%, preferably 50% of the total amount of ethylene fed.

Further, in the case of blow moulding, the conditions of the polymerization system (L) are as follows: the molar ratio of ethylene to hydrogen is preferably 1:1.0 to 1:3.5, more preferably 1:1.2 to 1:3.0, and the amount of ethylene fed is 30 to 70%, preferably 50% of the total amount of ethylene fed. Those of the polymerization system (H) are as follows: the molar ratio of ethylene to hydrogen

is preferably 1:0.005 to 1:0.5, more preferably 1:0.01 to 1:0.4, and the amount of ethylene fed is 30 to 70%, preferably 50% of the total amount of ethylene fed.

In the continuous multi-stage polymerization of the present invention, a plurality of polymerization vessels are usually connected in series, but it is also possible to connect a plurality of polymerization vessels in parallel (or partly in parallel) thereby to arrange the first stage polymerization system and/or the second stage one.

The solvent employed for the polymerization of the production process of the present invention is suitably a saturated hydrocarbon of 4 to 15 carbon atoms, such as butane, pentane, hexane, heptane, octane, kerosene.

Preparation of the catalyst employed in the production process of the present invention is characterized by reacting a trivalent metal halide with a divalent metal hydroxide, oxide or carbonate, or a composite compound containing such a compound or hydrate of a divalent metal compound to obtain solid product (I); reacting this solid product (I) as a mixture with a polysiloxane and a compound of a transition metals of IVa or Va of the Periodic Table, to obtain a solid product (II) with the transition metal compound supported; and combining this solid product (II) with an organoaluminium compound.

For the trivalent metal halide, aluminium trichloride (anhydrous) and ferric chloride (anhydrous) are suitable.

As for the divalent metal hydroxide, etc (often referred to herein as the divalent metal-containing compound), one can use for example, hydroxides such as $Mg(OH)_2$, $Ca(OH)_2$, $Zn(OH)_2$, $Mn(OH)_2$; oxides such as MgO, CaO, ZnO, MnO; composite oxides containing divalent metal(s) such as $MgAl_2O_4$, $Mg_2SiO_4$, $Mg_6MnO_8$; carbonates such as $MgCO_3$, $MnCO_3$, $CaCO_3$; hydrates of halides such as $SnCl_2 \cdot 2H_2O$, $MgCl_2 \cdot 6H_2O$, $NiCl \cdot 6H_2O$, $MnCl_2 \cdot 4H_2O$, $KMgCl_3 \cdot 6H_2O$; hydrates of composite compounds containing an oxide and halide such as

$$8MgO \cdot MgCl_2 \cdot 15H_2O;$$

hydrates of composite compounds containing a divalent metal oxide such as

$$3MgO \cdot 2SiO_2 \cdot 2H_2O;$$

hydrates of composite compounds containing a carbonate and hydroxide such as

$$3MgCO_3 \cdot Mg(OH)_2 \cdot 3H_2O,$$

hydrates of a hydroxide and carbonate containing a divalent metal such as

$$Mg_6Al_2(OH)_{16}CO_3 \cdot 4H_2O.$$

The solid product (I) is obtained by reacting the trivalent metal halide with the divalent metal-containing compound. For this reaction, it is preferable to mix the ingredients in advance by milling for 5 to 100 hours in the case of ball mill or for 1 to 10 hours in the case of vibration mill, to bring them into a fully mixed state. As for the proportion of the trivalent metal halide mixed with the divalent metal compound, an atomic ratio of divalent metal to trivalent metal of 0.1:1 to 20:1 may be usually sufficient, with a preferable range being 1:1 to 10:1. The reaction temperature is usually 20° to 500°C, preferably 50° to 300°C. The reaction time is suitably 30 minutes to 50 hours; at lower reaction temperatures reaction is carried out for a longer time, so that no unreacted trivalent metal remains.

As for the polysiloxane, acyclic or cyclic siloxane polymers expressed by the following general formula can be employed:

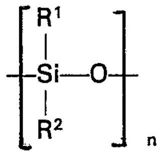

wherein $n$ is 3 to 10,000, and $R^1$ and $R^2$ represent the same or different groups capable of linking to silicon. Particularly usable are those polysiloxanes wherein the groups $R^1$ or $R^2$ are throughout the molecule hydrogen or one kind of hydrocarbon groups such as alkyl groups or aryl groups, halogens, alkoxy groups, aryloxy groups, residual groups from fatty acids, and those wherein two or more kinds of the foregoing groups are distributed within one molecule in various proportions, etc. Polysiloxanes which are usually employed are polymers wherein $R^1$ and $R^2$ are both hydrocarbon groups. As concrete examples, lower alkylsiloxane polymers such as octamethyltrisiloxane

$$CH_3[Si(CH_3)O]_2Si(CH_3)_3,$$

octaethylcyclotetrasiloxane $[Si(C_2H_5)_2O]_4$, alkylsiloxane polymers such as dimethylpolysiloxane $[Si(CH_3)_2O]_n$, ethylpolycyclosiloxane $[SiH(C_2H_5)O]$, methylethylpolysiloxane

$$[Si(CH_3)(C_2H_5)O]_n,$$

arylsiloxane polymers such as hexaphenylcyclotrisiloxane $[Si(C_6H_5)_2O]_3$, diphenylpolysiloxane $[Si(C_6H_5)_2O]_n$, alkylarylsiloxane polymers such as diphenyloctamethyltetrasiloxane

$$(CH_3)_3SiO[Si(CH_3)(C_6H_5)O]_2Si(CH_3)_3,$$

methylphenylpolysiloxane $[Si(CH_3)(C_6H_5)O]_n$,

Besides, alkylhydrogensiloxane polymers and haloalkylsiloxane or haloarylsiloxane polymers wherein $R^1$ is hydrogen or halogen and $R^2$ is a

hydrocarbon group such as an alkyl group, aryl group, can be mentioned. Further, polysiloxanes wherein $R^1$ and $R^2$ are alkoxy or aryloxy groups or fatty acid residual group may also be employed. These various polysiloxanes may be employed in admixture. Preferably liquid polysiloxanes are employed, with the viscosity (at 25°C) suitable being in the range of 10 to 10,000 centistokes, preferably 10 to 1,000 centistokes (1 cst=$10^{-6}$ $m^2/s$).

As examples for the transition metal compound, halides, oxyhalides, alcoholates, alkoxyhalides, acetoxyhalides, of titanium or vanadium, for example, titanium tetrachloride, titanium tetrabromide, tetraethoxytitanium, tetrabutoxytitanium, monochlorobutoxytitanium, dichlorodibutoxytitanium, trichloromonoethoxytitanium, vanadium tetrachloride, vanadium oxytrichloride, can be mentioned.

In the preparation of the solid product (II), the following concrete procedures may be employed:

(1) Solid product (I), polysiloxane and transition metal compound are at the same time mixed and reacted together;
(2) Solid product (I) is mixed with a polysiloxane, and transition metal compound is then added, followed by reaction;
(3) Solid product (I) is mixed with transition metal compound, and polysiloxane is then added, followed by reaction;
(4) Polysiloxane is mixed with transition metal compound, and the resulting mixture is then mixed with solid product (I).

Any of these preparations may be carried out in the presence or absence of solvent.

The mixing proportion of solid product (I), polysiloxane and transition metal compound is usually 10 to 10,000 g, preferably 20 to 5,000 g, more preferably 20 to 1,000 g of polysiloxane and 1 to 1,000 g, preferably 10 to 500 g of transition metal compound, based on 100 g of solid product (I), respectively, and 2 to 2,000 g, preferably 5 to 500 g, more preferably 30 to 500 g of transition metal compound based on 100 g of polysiloxane. Mixing is normally carried out suitably at −50° to +30°C, most usually at room temperature (about 20°C), and is preferably carried out with stirring. Mixing is followed by reaction e.g. with stirring at 30° to 300°C, preferably 50° to 200°C, for 10 minutes to 30 hours.

In the case (4) where polysiloxane is mixed with transition metal compound and the resulting mixture is then mixed and reacted with solid product (I), the mixture of polysiloxane with transition metal compound may be kept for instance at room temperature to 100°C, preferably at 60°C or lower, for one minute to 5 hours, in advance of mixing the mixture with solid product (I).

After completion of the reaction by whatever procedure, the reaction mixture is typically subjected to separation by filtration and repeated washings to remove unreacted transition metal compound and polysiloxane, followed by drying to obtain solid product (II).

It is not always necessary to employ solvent at the time of mixing and reaction in the preparation of solid product (II), but since uniform reaction is desirable, optionally one or two or all of the above-mentioned components may be dissolved or dispersed in solvent in advance, followed by mixing. As for the total amount of solvent employed, about 10 times or less the total amount by weight of the respective components may be sufficient. The solvent employed for preparing the solid product (II) can be for example an aliphatic hydrocarbon such as hexane, heptane, octane, nonane, decane, an aromatic hydrocarbon such as benzene, toluene, xylene, ethylbenzene, cumene, a halogenated aromatic hydrocarbon such as chlorobenzene, dichlorobenzene, trichlorobenzene, a halogenated hydrocarbon such as carbon tetrachloride, chloroform, dichloroethane, trichloroethylene, tetrachloroethylene, carbon tetrabromide.

As for the organoaluminium compound, examples include trialkylaluminiums such as triethylaluminium, triisobutylaluminium, trihexylaluminium, dialkylaluminium monochlorides such as diethylaluminium monochloride, ethylaluminium sesquichloride, ethylaluminium dichloride. Further, alkoxyalkylaluminiums such as monoethoxydiethylaluminium, diethoxymonoethylaluminium may also be employed.

Specific features of the present invention are as follows:

In the continuous multi-stage polymerization of ethylene, use of specific polymerization catalysts shown herein has made possible a low temperature polymerization at 120°C or lower (slurry polymerization). Thus the process of the present invention is superior to known continuous high temperature dissolution polymerization, from an economical point of view, in that the amount of solvent used at the time of polymerization is small thereby increasing polymer concentration. Also there is an advantage that polymer can be obtained in the form of powder. Further, in the polymerization of the present invention, polymerization reaction and molecular weight are easily controlled, and adhesion of polymer onto the wall of polymerization vessel does not occur at all or is extremely slight thus making possible a long term stabilized multi-stage polymerization. The catalyst employed in the present invention are different from known catalysts, that is, they have an extremely high polymerization active; hence it is possible to omit the step of removing catalyst remaining in polymer after completion

of the reaction, i.e. to omit the deashing step. Another specific feature of the present invention is that the molecular weight distribution of polyethylene obtained is typically much broader than those in the case of known continuous high temperature dissolution polymerizations. Thus, flow characteristics at the time of molding are superior; hence resin pressure at the time of molding is low; high speed molding is possible; and appearance of molded products are good due to no occurrence of melt fracture. In the case of film production, the film has adequate strengths and opacity; no fish eye is observed; the surface of the film is smooth; and moldability is stabilized over a long time. Further, the bulk density of polyethylene powder obtained according to the present invention is in the range of 0.35 to 0.45, and due to the good form of powder particles, the production efficiency per unit volume of polymerization vessel per hour is high, no trouble at the time of transporting polymer powder through piping occurs; and granulation of powder is easy.

The present invention will be concretely described by way of Examples and Comparative examples.

In these Examples and Comparative examples, melt index was obtained according to ASTM D-1238 (E). $\overline{M}_w/\overline{M}_n$ (wherein $\overline{M}_w$: weight average molecular weight and $\overline{M}_n$: number average molecular weight) was obtained according to gel permeation chromatography by GPC-200 type machine made by the Waters Company.

Polymer yield was shown by polyethylene yield (g) per g of solid product (II) per hour (g-polymer/g-(II) · hr) or polyethylene yield (g) per mmol of Ti or V atom per hour (g-polymer/mmol-Ti or V · Hr).

As for film preparation, a film 10 μm thick was prepared at 180° to 200°C employing an inflation molding machine (50 mmϕ, 75 rpm, made by Plako Company). At the time of the preparation, the amount of molten resin discharged was observed.

As for the physical properties of the resulting film, punching impact strength was obtained according to ASTM D-781, and haze value, according to ASTM D-1003. As for fish eye, the number of high molecular weight substance particles of 50 μm or larger in diameter, present in a film area of 1000 $cm^2$ was observed.

As for blow molding, a 4l capacity bottle was prepared at 165 to 175°C, at a cycle time of 3 minutes, employing a blow molding machine (55 mmϕ, 50 rpm, IPB-110 type machine made by Ishikawajimaharima Seisakusho).

Stress-resistant cracking properties ($F_{50}$ value) was obtained according to ASTM D-1693.

Example 1

(1) Preparation of transition metal catalyst component

Magnesium hydroxide (76 kg) and aluminum chloride (anhydrous) (90 kg) were in advance mixed together and milled in a vibration mill for 5 hours, followed by reaction at 150°C for 5 hours. The resulting material was then cooled and finely milled to obtain a solid product (I).

$TiCl_4$ (173 kg) and acyclic dimethylpolysiloxane (viscosity: 100 centistockes) (100 kg) were added to toluene (150 l), and the above-mentioned solid product (I) (100 kg) was then added, followed by reaction at 110°C for 2 hours. After completion of the reaction, filtration was carried out in usual manner and separated solid product was washed with hexane until neither unreacted $TiCl_4$ nor unreacted polysiloxane was detected in the filtrate, followed by drying in vacuo to obtain a solid product (II) (referred to hereinafter as solid product $(II)_1$). The amount of Ti atom in 1 kg of solid product $(II)_1$ was 0.2 mol. This solid product $(II)_1$ was employed as transition metal catalyst component.

(2) Continuous multi-stage polymerization (LH) of ethylene

Into a first stage polymerization vessel of 10l capacity were fed solid product $(II)_1$ at a rate of 35 mg (0.007 m mol in terms of Ti atom) per hour, triethylaluminum at a rate of 0.3 m mol per hour and hexane at a rate of 3 l per hour, and while the contents of the polymerization vessel were discharged so that the liquid level in the vessel was maintained at 80% of the capacity, ethylene containing 5% by volume of butene-1, at a rate of 360 Nl per hour and hydrogen at such a rate that a molar ratio of ethylene (containing butene-1) to hydrogen of 1:1.5 in the gas phase part of the polymerization vessel was given, were fed at 80°C to continuously carry out a first stage polymerization employing a polymerization system (L), under a total pressure of 40 $kg/cm^2$ (gauge).

After completion of the first stage polymerization, polymer suspended in the solvent was led to a degassing vessel of 5l capacity maintained under an inner pressure of 2 $kg/cm^2$ (gauge) to separate the most part of hydrogen, etc. dissolved in hexane. Separated hydrogen was circulated and reused so that the molar ratio of ethylene to hydrogen in the gas phase part of the first stage polymerization vessel was maintained at a given ratio.

Polymer slurry having left the degassing vessel was totally introduced into a second stage polymerization vessel of 10l capacity, and while the contents of the vessel were discharged so that the liquid level was maintained at 80% of the capacity, without adding hydrogen and catalyst, ethylene was fed at a rate of 340 NL per hour at 75°C to continuously carry out a second stage polymerization employing a polymerization system (H) under a total pressure of 40 $kg/cm^2$ (gauge). The molar ratio of ethylene to hydrogen in the gas phase part of the second stage polymerization vessel was 1:0.06.

The above-mentioned multi-stage polymerization was continuously carried out for 120 hours. Operation was extremely stabilized, and after drying without deashing, 102 kg of polyethylene powder were obtained. Polymer yield was 24,300 g-polymer/g-(II)·Hr. The polyethylene powder had a melt index of 0.05, a bulk density of 0.40, a density of 0.950, a butene content of 2.5% by weight and a $\overline{M}_w/\overline{M}_n$ value of 25.

A film was prepared from this polyethylene powder. The amount of molten resin discharged at the time of film preparation was 24 kg/hr. Its punching impact strength was 140 kg-cm/mm, the haze value, 77%, and the number of fish eyes, 9. The surface condition was good. Thus the film had film performances without any practical problems.

Comparative example 1

A one-stage polymerization was continuously carried out for 120 hours in the same manner as in Example 1 (2) except that the molar ratio of ethylene (containing butene) to hydrogen in the gas phase of polymerization vessel was adjusted to 1:0.14, to obtain 50 kg of polyethylene having a melt index of 0.05 which was same as in Example 1. However the $\overline{M}_w/\overline{M}_n$ value of this polyethylene was 6. Film preparation employing this polyethylene was unsatisfactory.

Comparative example 2

A transition metal catalyst component was obtained in the same manner as in Example 1, (1) except that no dimethylpolysiloxane was employed. The amount of Ti atom in 1 kg of the catalyst component was 0.15 mol. A continuous multi-stage polymerization was carried out in the same manner as in Example 1, (2) that the catalyst component was substituted for solid product $(II)_1$ to obtain 20 kg of polyethylene having a $\overline{M}_w/\overline{M}_n$ value of 10.

Film prepared from this polyethylene had fish eyes, its film-making properties were unstabilized and its strengths were unsufficient. Thus the film was unsatisfactory.

Example 2

Into a first stage polymerization of 10l capacity were fed solid product $(II)_1$ at a rate of 35 mg per hour, triethylaluminum at a rate of 0.3 m mol per hour and hexane at a rate of 2.5l per hour, and while the contents of the polymerization vessel were discharged so that the liquid level in the vessel was maintained at 80% of the capacity, ethylene at a rate of 300 Nl per hour and hydrogen at such a rate that a molar ratio of ethylene to hydrogen of 1:3.5 in the gas phase part of the polymerization vessel was given, were fed at 85°C to continuously carry out a first stage polymerization employing a polymerization system (L), under a total pressure of 40 kg/cm² (gauge).

After completion of the first stage polymerization, polymer suspended in the solvent was led to a degassing vessel of 5l capacity maintained under an inner pressure of 1.0 kg/cm² (gauge) to separate hydrogen and ethylene dissolved in hexane. Separated hydrogen and ethylene were circulated and reused so that the molar ratio of ethylene to hydrogen in the gas phase part of the first stage polymerization vessel was maintained at a given ratio.

Polymer slurry having left the degassing vessel was totally introduced into a second stage polymerization vessel of 10l capacity, and while the contents of the vessel were discharged so that the liquid level was maintained at 80% of the capacity, without adding hydrogen and catalyst, ethylene containing 5% by volume of butene-1 was fed at a rate of 315 NL per hour at 70°C to continuously carry out a second stage polymerization employing a polymerization system (H) under a total pressure of 30 kg/cm² (gauge). The molar ratio of ethylene (containing butene) to hydrogen in the gas phase part of the second stage polymerization vessel was 1:0.01.

The above-mentioned multi-stage polymerization (LH) was continuously carried out for 120 hours. Operation was extremely stabilized, and after drying without deashing, 91 kg of polyethylene powder were obtained. Polymer yield was 21,700 g-polymer/g-(II)·Hr, and 108,000 g-polymer/mmol-Ti·Hr. The polyethylene had a melt index of 0.04, a bulk density of 0.41, a density of 0.950 g/cm³, a butene content of 2.0% by weight and a $\overline{M}_w/\overline{M}_n$ value of 30.

A film was prepared from this polyethylene powder. The amount of molten resin discharged at the time of film preparation was 27 kg/hr and its fluidity was good. The film-making condition was also stabilized. The punching impact strength of film was 180 kg-cm/mm, that is, sufficient, the haze value was 81%, it had a suitable opaque feeling and the number of fish eyes was 4, that is, very small. The surface of film was smooth and good. Thus the film had far superior film performances.

Comparative example 3

A one-stage polymerization was continuously carried out under the same conditions as in Example 2 except that the molar ratio of ethylene to hydrogen in the gas phase part of the polymerization vessel was adjusted to 1:0.16, to obtain 43 kg of polyethylene having a melt index of 0.05. However, the $\overline{M}_w/\overline{M}_n$ value of this polyethylene was 6. Preparation of film from this polyethylene was impossible.

Comparative example 4

A transition metal catalyst component was prepared in the same manner as in Example 1, (1) except that no dimethylpolysiloxane was employed. The amount of Ti atom in 1 kg of the catalyst component was 0.15 mol. A continuous multi-stage polymerization was carried out in the same manner as in Example 2 except that the catalyst component obtained above in place of solid product $(II)_1$ of Example 2 was fed at a rate of 250 mg/hr, and triethylaluminum was fed at a rate of 1.5 mmol/hr. After 50 hours since the start of polymerization, polymer began to adhere onto the wall of the second stage polymerization vessel, and after 72 hours, polymer adhesion also onto the wall of the first stage polymerization vessel was observed. Further, polymer agglomerates were also observed in the polymer obtained. Thus the operation was unstable. 87 kg of polyethylene were obtained. The polymer yield was 2,900 g-polymer/g-(II) · Hr and 19,000 g-polymer/mmol-Ti · Hr.

The polyethylene had a melt index of 0.05, a bulk density of 0.25 and a $\overline{M}_w/\overline{M}_n$ value of 13.

Film was prepared from this polyethylene, and the amount of polyethylene discharged was 12 kg/hr, that is, its fluidity was much inferior. Film-making condition was also unstable. Punching impact strength of film was 80 kg-cm/mm, that is, the strength was insufficient. The number of fish eyes was 450, that is, the surface condition was very bad. Thus the film was not practically useful.

Comparative example 5

Solid product (I) obtained in Example 1 (100 kg) and dimethylpolysiloxane (same as the material of Example 1) (100 kg) were added to toluene (150l), and they were reacted together with stirring at 110°C for 2 hours, followed by adding 173 kg of $TiCl_4$ without removing unreacted dimethylpolysiloxane, and a further reaction at 110°C for 2 hours. The following procedure was carried out in the same manner as in Example 1 to obtain a final solid product. The content of Ti atom in 1 kg of final solid product was 0.14 mol.

A continuous multi-stage polymerization was carried out in the same manner as in Example 2 except that the final solid product obtained above, in place of solid product $(II)_1$ of Example 2 was fed at a rate of 100 mg/hr and triethylaluminum was fed at a rate of 0.6 mmol/hr to obtain 90 kg of polyethylene. The polymer yield was 7,500 g-polymer/g-(II) · Hr and 54,000 g-polymer/mmol-Ti · Hr. The polyethylene had a melt index of 0.03, a bulk density of 0.34 and a $\overline{M}_w/\overline{M}_n$ value of 16.

Film was prepared from the polyethylene. The amount of polyethylene discharged was 16 kg/hr that is, its fluidity was inferior. The punching impact strength of film was 100 kg-cm/mm, that is, the strength was insufficient. The number of fish eyes was 100, that is, the surface condition was also inferior. Thus the film was not practically useful.

Comparative example 6

A continuous multi-stage polymerization was carried out in the same manner as in Example 2 except that ethylene was fed at a rate of 120 Nl/hr and hydrogen was fed so that the molar ratio of ethylene to hydrogen in the gas phase part of the vessel was adjusted to 1:4.0 to carry out a first stage polymerization under a total pressure of 25 $kg/cm^2$ (gauge), and then ethylene containing 3% by volume of butene-1-was fed at a rate of 495 Nl/hr and hydrogen was fed so that the molar ratio of ethylene (containing butene) to hydrogen was adjusted to 1:0.05 to carry out a second stage polymerization under a total pressure of 40 $kg/cm^2$ (gauge). 91 kg of polyethylene were obtained. The polyethylene had a melt index of 0.03 and a $\overline{M}_2/\overline{M}_n$ value of 16.

Film was prepared from the polyethylene. The amount of polyethylene discharged was 13 kg/hr, the punching impact strength of film, 85 kg-cm/mm, and the number of fish eyes, 600. Thus the film was not practically useful.

Comparative example 7

A continuous multi-stage polymerization of ethylene was carried out in the same manner as in Example 2 except that ethylene was fed at a rate of 540 Nl/hr and hydrogen was fed so that the molecular ratio of ethylene to hydrogen in the gas phase part was adjusted to 1:1.6 to carry out a first stage polymerization under a total pressure of 40 $kg/cm^2$ (gauge), and then ethylene was fed at a rate of 60 Nl/hr hydrogen was fed so that the molecular ratio of ethylene to hydrogen in the gas phase part was adjusted to 1:0.002 to carry out a second stage polymerization under a total pressure of 10 $kg/cm^2$ (gauge). 85 Kg of polyethylene were obtained. This polyethylene had a melt index of 0.05 and a $\overline{M}_w/\overline{M}_n$ value of 13.

Film was prepared from the polyethylene. The amount of polyethylene discharged was 14 kg/hr, the punching impact strength, 60 kg-cm/mm, and the number of fish eyes, 500. The film was not practically useful.

Example 3

(1) Preparation of transition metal catalyst component

Hydrotalcite ($Mg_6Al_2(OH)_{16}CO_3 \cdot 4H_2O$)(70 g) and aluminum chloride (anhydrous) (80 g) were at the same time mixed, milled and reacted on heating at 170°C for 3 hours in a vibration mill to obtain a solid product (I).

Trichloromonobutoxytitanium (150 g) and solid product (I) obtained above (100 g) were mixed together in toluene (200 ml), successively acyclic methylhydrogenpolysiloxane (viscosity: 300 centistockes) (150 g) was added, followed by reaction at 100°C for 4 hours. The resulting material was washed in the same manner as in Example 1, (1) to obtain a solid product (II) (referred to hereinafter as solid product $(II)_3$). The content of Ti atom in 1 g of solid product $(II)_3$ was 0.24 mmol.

(2) Continuous multi-stage polymerization (LH)

A first stage polymerization was carried out employing polymerization system (L) in the same manner as in Example 2, except that it was carried out at 90°C under feed of solid product $(II)_3$ at a rate of 30 mg/hr, ethylene containing 2% by volume of propylene at a rate of 306 NL/hr and hydrogen in a molar ratio of ethylene (containing propylene) to hydrogen at 1:3.3 in the gas phase. The following procedure was carried out in the same manner as in Example 2.

Successively a second stage polymerization was carried out employing polymerization system (H) in the same manner as in Example 2, except that it was carried out at 65°C under feed of ethylene containing 1% by volume of propylene and 3% by volume of butene-1, at a rate of 313 Nl/hr and hydrogen in molar ratio of ethylene (containing propylene and butene) to hydrogen of 1:0.009 in the gas phase part.

The above-mentioned multi-stage polymerization was continuously carried out for 150 hours. The operation was extremely stabilized. 112 Kg of polyethylene powder were obtained. The polymer yield was 24,900 g-polymer/g-(II) · Hr and 104,000 g-polymer/mmol-Ti · Hr.

This polyethylene had a melt index of 0.03, a bulk density of 0.40, a density of 0.948 g/cm³, a total content of propylene and butene of 1.8% by weight and a $\overline{M_w}/\overline{M_n}$ value of 2.8.

Film was prepared from this polyethylene. The amount of the polyethylene discharged at the time of film preparation was 27 kg/hr, the punching impact strength of film, 165 kg-cm/mm, the haze value, 80%, the number of fish eyes, 8. The surface condition was good. Thus the film had superior film performances.

Example 4

A continuous multi-stage polymerization (LH) was carried out in the same manner as in Example 2 except that triisobutylaluminum (0.4 mmol) was employed in place of triethylaluminum and the molar ratio of ethylene to hydrogen in the gas phase part of the first stage polymerization vessel was adjusted to 1:2.8 to carry out a first stage polymerization, and then the molar ratio of ethylene (containing butene) to hydrogen in the gas phase part of the second stage polymerization vessel was adjusted to 1:0.03. 91 Kg of polyethylene powder was obtained. The polyethylene had a melt index of 0.04, a bulk density of 0.39, a density of 0.949, a butene content of 1.9% by weight and a $\overline{M_w}/\overline{M_n}$ value of 27.

Film was prepared from the polyethylene. The amount of polyethylene discharged at the time of film preparation was 25 kg/hr, the punching impact strength of film, 160 k-cm/mm, the haze value, 79% and the number of fish eyes, 6. Thus the film had film performances which did not raise any practical problem.

Example 5

(1) Preparation of transition metal catalyst component

Magnesium oxide (75 g) and aluminum chloride (anhydrous) (80 g) were mixed and milled in a ball mill for 24 hours, and then heated at 200°C for 3 hours, followed by cooling and milling to obtain a solid product (I).

This solid product (I) (150 g), acyclic methylethylpolysiloxane (viscosity): 500 centistokes) (100 g) and $TiCl_4$ (130 g) were at the same time added to heptane (200 ml) and mixed together, followed by reaction at 80°C for 3 hours. The resulting material was washed in the same manner as in Example 1 to obtain a solid product (II) (referred to hereinafter as solid product $(II)_5$). The content of Ti atom in 1 g of solid product $(II)_5$ was 0.23 mmol.

(2) Continuous multi-stage polymerization of ethylene (LH)

A continuous multi-stage polymerization (LH) was carried out in the same manner as in Example 1 except that solid product $(II)_5$ at a rate of 30 mg/hr, ethylene at a rate of 480 Nl/hr and hydrogen in a molar ratio of ethylene to hydrogen of 1:1.2 in the gas phase part of the first stage polymerization vessel were fed to the vessel, and ethylene at a rate of 200 Nl/hr was fed to the second stage polymerization vessel at 70°C and the molar ratio of ethylene to hydrogen in the gas phase part of the vessel was adjusted to 1:0.11. The continuous operation was carried out for 150 hours to obtain 127 kg of polyethylene powder.

This polyethylene had a melt index of 0.30, a bulk density of 0.38, a density of 0.955 and a $\overline{M_w}/\overline{M_n}$ value of 22.

Bottle was molded from the polyethylene according to blow molding. The resin pressure at the time of molding was low to make possible a high speed molding. The surface of the molded product was good, and the weight and uneven thickness of the product were satisfactory.

Comparative example 8

A one-stage polymerization was continuously carried out for 150 hours in the same manner as in Example 5, (2) except that the molar ratio of ethylene to hydrogen in the gas phase part of the polymerization vessel was adjusted to 1:0.7. 89 Kg of polyethylene having a melt index of 0.30 which was the same as in Example 5 were obtained. However, this polyethylene had a $\overline{M_w}/\overline{M_n}$ value of 6.

Bottle preparation according to blow molding was impossible.

Comparative example 9

A transition metal catalyst component was obtained in the same manner as in Example 5, (1) except that no methylethylpolysiloxane was employed. The content of Ti atom in 1 g of the catalyst component was 0.16 mmol. A continuous multi-stage polymerization of ethylene

was carried out in the same manner as in Example 5, (2) except that the above catalyst component was employed in place of solid product $(II)_5$, to obtain 25 kg of polyethylene, which had a $\overline{M_w}/\overline{M_n}$ value of 10.

Bottle was molded from the polyethylene according to blow molding. The surface of the molded product was not smooth due to melt fracture, and the thickness was uneven. Thus the bottle was unsatisfactory.

Example 6

Into a first stage polymerization vessel of 10l capacity were fed solid product $(II)_5$ obtained in Example 5, at a rate of 30 mg per hour, triisobutylaluminum at a rate of 0.4 m mol per hour and hexane at a rate of 2l per hour, and while the contents of the polymerization vessel were discharged so that the liquid level in the vessel was maintained at 80% of the capacity, ethylene, at a rate of 300 Nl per hour and hydrogen at such a rate that a molar ratio of ethylene to hydrogen of 1:2.3 in the gas phase part of the polymerization vessel was given, were fed at 80°C to continuously carry out a first stage polymerization employing a polymerization system (L), under a total pressure of 30 kg/cm² (gauge).

After completion of the first stage polymerization, polymer suspended in the solvent was led to a degassing vessel of 5l capacity maintained under an inner pressure of 2 kg/cm² (gauge) to separate hydrogen and ethylene dissolved in hexane. Separated hydrogen and ethylene were circulated and reused so that the molar ratio of ethylene to hydrogen in the gas phase part of the first stage polymerization vessel was maintained at a given ratio.

Polymer slurry having left the degassing vessel was totally introduced into a second stage polymerization vessel of 10l capcity, and while the contents of the vessel were discharged so that the liquid level was maintained at 80% of the capacity, without adding catalyst, ethylene was fed at a rate of 300 Nl per hour at 70°C to continuously carry out a second stage polymerization employing a polymerization system (H) under a total pressure of 20 kg/cm² (gauge). The molar ratio of ethylene to hydrogen in the gas phase part of the second stage polymerization vessel was 1:0.09.

The above-mentioned multi-stage polymerization was continuously carried out for 150 hours. Operation was extremely stabilized, and after drying without deashing, 107 kg of polyethylene powder were obtained. Polymer yield was 23,800 g-polymer/g-(II)·Hr and 103,000 g-polymer/mmol-Ti·Hr. had a melt index of 0.25, a bulk density of 0.41, a density of 0.955/g/cm³, and a $\overline{M_w}/\overline{M_n}$ value of 25.

Bottle was molded from the polyethylene by blow molding. The drawdown of parison was low; no melt fracture occurred at the time of molding; no sharkskin phenomenon was observed; the surface of molded product was very good; and the weight of one molded product was 280 g and the thickness was almost uneven. Thus the bottle had practically sufficient properties.

Comparative example 10

A one-stage polymerization was continuously carried out for 150 hours in the same manner as in Example 6 except that the molar ratio of ethylene to hydrogen in the gas phase part of the polymerization vessel was adjusted to 1:0.6, to obtain 54 kg of polyethylene having a melt index of 0.25 which was same as in Example 6. However, the $\overline{M_w}/\overline{M_n}$ value of this polyethylene was 6. Bottle preparation employing this polyethylene according to blow molding was impossible.

Comparative example 11

Solid product (I) obtained in Example 5, (1) (100 g) and acyclic methylethylpolysiloxane (same as the material of Example 5) (100 g) were added to heptane (200 ml), and they are reacted together with stirring at 80°C for 3 hours, followed by adding 130 g of $TiCl_4$ without removing unreacted polysiloxane, and a further reaction at 80°C for 3 hours. The following procedure was carried out in the same manner as in Example 5, (1) to obtain a final solid product. The content of Ti atom in 1 g of final solid product was 0.16 mmol.

A continuous multi-stage polymerization (LH) was carried out in the same manner as in Example 6 except that the above final solid product (90 g) was used in place of solid product $(II)_5$ of Example 6 and triisobutylaluminum was fed at a rate of 0.8 mmol/hr to obtain 105 g of polyethylene. The polymer yield was 7,800 g-polymer/g-(II)·Hr. The polyethylene had a melt index of 0.28, a bulk density of 0.36 and a $\overline{M_w}/\overline{M_n}$ value of 13.

Bottle was molded from the polyethylene by blow molding. The surface of the molded product had sharkskin, that is, a bad appearance; the weight of one molded product was 230 g, that is, insufficient and a phenomenon of uneven thickness was observed. Thus the bottle was not practically useful.

Example 7

(1) Preparation of transition metal catalyst component

Manganese chloride ($MnCl_2 \cdot 4H_2O$) (80 g) and ferric chloride (anhydrous) (70 g) were in advance mixed and milled in a vibration mill for 2 hours, followed by reaction at 120°C for 6 hours to obtain a solid product (I).

This solid product (I) (100 g), acyclic ethylhydrogensiloxane (viscosity: 100 centistokes) (100 g), $VCl_4$ (100 g) and toluene (200 ml) were at the same time mixed together, followed by reaction at 110°C for 2 hours to obtain a solid product (II) (referred to hereinafter as solid product $(II)_7$). The vanadium content in 1 g of solid product $(II)_7$ was 0.15 mmol.

(2) Continuous multi-stage polymerization (LH)

A first stage polymerization was carried out employing a polymerization system (L) in the same manner as in Example 6 except that it was carried out at 85°C, under feed of solid product $(II)_7$ at a rate of 47 mg/hr, ethylene containing 2% by volume of propylene at a rate of 306 Nl/hr and hydrogen in a molar ratio of ethylene (containing propylene) to hydrogen of 1:2.4. Hydrogen, ethylene and propylene separated at a degassing vessel were circulated and reused so that the molar ratio thereof in the gas phase part of the first stage polymerization vessel was maintained at a definite ratio. Thereafter, a second stage polymerization was carried out employing polymerization system (H) in the same manner as in Example 6, except that it was carried out at 75°C under feed of ethylene containing 2% by volume of butene-1 at a rate of 306 Nl/hr and hydrogen so that the molar ratio of ethylene (containing butene) to hydrogen was maintained at 1:0.1 when it was required.

The above multi-stage polymerization was continuously carried out for 120 hours to obtain 90 kg of polyethylene powder. Polymer yield was 16,000 g-polymer/g-(II) · Hr. This polyethylene had a melt index of 0.23, a bulk density of 0.37, a density of 0.954 g/cm³, a total content of propylene and butene of 1.5% by weight and a $\overline{M_w}/\overline{M_n}$ value of 25.

Bottle was prepared according to blow molding. Drawdown of a parison was low; no melt fracture at the time of molding occurred; no sharkskin phenomenon was observed and the surface of molded product was very good; the weight of one molded product was 265 g, that is, sufficient; and the resistance to stress cracking was 180 hours, that is, no problem was raised. Thus the bottle was practically useful.

Comparative example 12

A continuous one-stage polymerization was carried out for 120 hours in the same manner as in Example 7 except that the molar ratio of ethylene (containing propylene) to hydrogen was adjusted to 1:0.18 to obtain 45 kg of polyethylene having a melt index of 0.27. However, the $\overline{M_w}/\overline{M_n}$ value of this polyethylene was 7. Bottle preparation from this polyethylene according to blow molding was impossible.

Comparative example 13

Solid product (I) obtained in Example 7 (100 g) and ethylhydrogenpolysiloxane (same as the material of Example 7) (100 g) were added to toluene (200 ml), and they were reacted together at 110°C for 2 hours, followed by adding 100 g of $VCl_4$ without removing unreacted polysiloxane, and a further reaction at 110°C for 2 hours. The following procedure was carried out in the same manner as in example 7, to obtain a final solid product. The content of V atom in 1 g of final solid product was 0.12 mmol.

A continuous multi-stage polymerization was carried out in the same manner as in Example 7 except that the above final solid product was fed at a rate of 140 mg/hr in place of solid product $(II)_7$ of Example 7 and triisobutylaluminum, at a rate of 0.96 mmol/hr to obtain 88 g of polyethylene powder. The polymer yield was 5,200 g-polymer/g-(II) · Hr. The polyethylene had a melt index of 0.30, a bulk density of 0.34 and a $\overline{M_w}/\overline{M_n}$ value of 13.

Bottle was molded from the polyethylene by blow molding. The surface of the molded product had sharkskin, that is, a bad appearance; the weight of one molded product was 225 g, that is, insufficient; and a phenomenon of uneven thickness was observed. Thus the bottle was not practically useful.

Example 8

(1) Preparation of transition metal catalyst component

Magnesia cement ($3MgO \cdot MgCl_2 \cdot 4H_2O$ (110 g) and aluminum chloride (anhydrous) (100 g) were reacted together in a rotating ball mill for 40 hours on heating at 100°C, to obtain a solid product (I).

Octaethylcyclotetrasiloxane $[Si(C_2H_5)_2O]_4$ (viscosity: 10 centistokes) (150 g) and $VOCl_3$ (120 g) were added to xylene (200 ml) and mixed together, and the above-mentioned solid product (I) (100 g) was then added, followed by reaction at 120°C for 2 hours, to obtain a solid product (II) (referred to hereinafter as solid product $(II)_8$). The content of V atom in 1 g of solid product $(II)_8$ was 0.18 mmol.

(2) Continuous multi-stage polymerization (LH) of ethylene

Into a first stage polymerization vessel of 10l capacity were fed solid product $(II)_8$ at a rate of 40 mg per hour, triisobutylaluminum at a rate of 0.35 m mol per hour and hexane at a rate of 2.5l per hour, and while the contents of the polymerization vessel were discharged so that the liquid level in the vessel was maintained at 80% of the capacity, ethylene containing 5% by volume of butene-1, at a rate 315 Nl per hour and hydrogen at such a rate that a molar ratio of ethylene (containing butene-1) to hydrogen of 1:0.008 in the gas phase part of the polymerization vessel was given, were fed at 70°C to continuously carry out a first stage polymerization employing a polymerization system (H), under a total pressure of 30 kg/cm² (gauge).

Successively, polymer suspended in solvent, having left the first stage polymerization vessel was totally introduced into a second stage polymerization vessel of 20l capacity, and while the contents of the vessel were discharged so that the liquid level was maintained at 80% of the capacity, ethylene at a rate of 300 Nl per hour, fresh triisobutylaluminum at a rate of 0.1 mmol/hr and hydrogen in a molar ratio of ethylene (containing butene introduced from

the first stage polymerization vessel) to hydrogen of 1:3.7 in the gas phase part of the polymerization vessel, were fed at 80°C to continuously carry out a second stage polymerization employing a polymerization system (L) under a total pressure of 40 kg/cm² (gauge).

The above-mentioned multi-stage polymerization (HL) was continuously carried out for 120 hours. Operation was extremely stabilized, and after drying without deashing, 90 kg of polyethylene powder were obtained. Polymer yield was 18,800 g-polymer/g-(II) · Hr, and 104,000 g-polymer/mmol-V · Hr. The polyethylene powder had a melt index of 0.05, a bulk density of 0.39, a density of 0.949, and a $\overline{M}_w/\overline{M}_n$ value of 29.

A film was prepared from this polyethylene powder. The amount of molten resin discharged was 26.5 kg/hr. Its punching impact strength was 175 kg-cm/mm, the haze value, 80%, and the number of fish eyes, 5. Thus the film had practically sufficient performances.

Comparative example 14

A continuous multi-stage polymerization of ethylene was carried out in the same manner as in Example 8 except that ethylene containing 3% by volume of butene-1 was fed at a rate of 495 Nl/hr and hydrogen was fed so that the molecular ratio of ethylene (containing butene) to hydrogen in the gas phase part was adjusted to 1:0.02 to carry out a first stage polymerization under a total pressure of 40 kg/cm² (gauge), and then ethylene was fed at a rate of 120 Nl/hr and hydrogen was fed so that the molecular ratio of ethylene (containing butene) to hydrogen in the gas phase part was adjusted to 1:4.2 to carry out a second stage polymerization under a total pressure of 25 kg/cm² (gauge). 91 Kg of polyethylene were obtained. This polyethylene had a melt index of 0.04 and a $\overline{M}_w/\overline{M}_n$ value of 14.

Film was prepared from the polyethylene. The amount of polyethylene discharged was 12 kg/hr, the punching impact strength, 80 kg-cm/mm, and the number of fish eyes, 700. The film was not practically useful.

Example 9

Into a first stage polymerization vessel of 10l capacity were fed solid product $(II)_1$ at a rate of 35 mg per hour (0.007 mmol in terms of Ti atom), triethylaluminum at a rate of 0.35 mmol per hour and hexane at a rate of 4l per hour, and while the contents of the polymerization vessel were discharged so that the liquid level in the vessel was maintained at 80% of the capacity, ethylene at a rate of 350 Nl per hour and hydrogen at such a rate that a molar ratio of ethylene to hydrogen of 1:0.05 in the gas phase part of the polymerization vessel was given, were fed at 70°C to continuously carry out a first stage polymerization employing a polymerization system (H), under a total pressure of 40 kg/cm² (gauge).

Polymer suspended in solvent, having left the first stage polymerization vessel was totally introduced into a second stage polymerization vessel of 20l capacity, by means of a transfer pump, and while the contents of the vessel were discharged so that the liquid level was maintained at 80% of the capacity, without adding hexane and catalyst, ethylene containing 5% by volume of butene-1 at a rate of 370 Nl per hour, and hydrogen in a molar ratio of ethylene to hydrogen of 1:1.6 in the gas phase part of the polymerization vessel, were fed at 80°C to continuously carry out a second stage polymerization employing a polymerization system (L) under a total pressure of 40 kg/cm² (gauge).

The above-mentioned multi-stage polymerization (HL) was continuously carried out for 120 hours. Operation was extremely stabilized, and after drying without deashing, 105 kg of polyethylene powder were obtained. The polyethylene had a melt index of 0.05, a bulk density of 0.40, a density of 0.950 g/cm³, and a $\overline{M}_w/\overline{M}_n$ value of 25.

A film was prepared from this polyethylene powder. The film-making properties were stabilized; the film had suitable strengths and opaque feeling; no fish eye was observed; and the surface condition was good. Thus the film was satisfactory.

Comparative example 15

A one-stage polymerization was continuously carried out for 120 hours in the same manner as in Example 9 except that the molar ratio of ethylene to hydrogen in the gas phase part of the polymerization vessel was adjusted to 1:0.15 to obtain 51 kg of polyethylene having a melt index of 0.05 which was the same as that of Example 9. However, the $\overline{M}_w/\overline{M}_n$ value of this polyethylene was 6. Preparation of film from this polyethylene was impossible.

Comparative example 16

A transition metal catalyst component was prepared in the same manner as in Example 1, (1) except that no dimethylpolysiloxane was employed. The amount of Ti atom in 1 kg of the catalyst component was 0.15 mol. A continuous multi-stage polymerization of ethylene was carried out in the same manner as in Example 9 except that solid product $(II)_1$ was replaced by the above catalyst component to obtain 20 kg of polyethylene $\overline{M}_w/\overline{M}_n$: 10).

Film was prepared from this polyethylene. Film had fish eyes; film-making properties were unstable; and strengths were insufficient. Thus the film was unsatisfactory.

A continuous multi-stage polymerization (HL) was carried out in the same manner as in Example 9 except that solid product $(II)_5$ at a rate of 30 mg/hr, ethylene at a rate of 210 Nl/hr and hydrogen in a molar ratio of ethylene to hydrogen of 1:0.1 in the gas phase part of the

first stage polymerization vessel were fed to the vessel, and ethylene at a rate of 495 Nl/hr, and hydrogen in a molar ratio of 1:1.3 in the gas phase part of the polymerization vessel, were fed to the second stage polymerization vessel. The continuous operation was carried out for 150 hours to obtain 130 kg of polyethylene powder.

This polyethylene had a melt index of 0.30, a bulk density of 0.38, a density of 0.955 and a $\overline{M}_w/\overline{M}_n$ value of 22.

Bottle was molded from the polyethylene according to blow molding. The resin pressure a the time of molding was low to make possible a high speed molding. The surface of the molded product was good, and the weight and unevenness of the product were satisfactory.

Comparative example 17

A one-stage polymerization was continuously carried out for 150 hours in the same manner as in Example 10, except that the molar ratio of ethylene to hydrogen in the gas phase part of the polymerization vessel was adjusted to 1:0.8. 40 Kg of polyethylene having a melt index of 0.30 which was the same as in Example 10 were obtained. However, this polyethylene had a $\overline{M}_w/\overline{M}_n$ value of 6.

Bottle preparation according to blow molding was impossible.

Comparative example 18

A transition metal catalyst component was obtained in the same manner as in Example 5, (1) except that no methylethylpolysiloxane was employed. The content of Ti atom in 1 g of the catalyst component was 0.16 mmol. A continuous multi-stage polymerization of ethylene was carried out in the same manner as in Example 10 except that the above catalyst component was employed in place of solid product $(II)_5$, to obtain 25 kg of polyethylene which had a $\overline{M}_w/\overline{M}_n$ value of 10.

Bottle was molded from the polyethylene according to blow molding. The surface of the molded product was not smooth due to melt fracture, and the thickness was uneven. Thus the bottle was unsatisfactory.

Example 11

(1) Preparation of transition metal catalyst component

Hydromagnesite ($3MgCO_3 \cdot Mg(OH)_2 \cdot 3H_2O$) (65 g) and ferric chloride (anhydrous) (70 g) were mixed and milled in a vibration mill for 10 hours, and then reacted at 300°C for 1 hour to obtain a solid product (I).

This solid product (I) (100 g) and acyclic di-n-butyl-polysiloxane (viscosity: 1000 centistokes) (200 g) were added to o-dichlorobenzene (150 ml) and mixed together, and further $TiCl_4$ (200 g) was added, followed by reaction at 160°C for 3 hours to obtain a solid product (II) (referred to hereinafter as solid product $(II)_{11}$). The content of Ti atom in 1 g of solid product $(II)_{11}$ was 0.20 mmol.

(2) Continuous multi-stage polymerization of ethylene (HL)

A first stage polymerization was carried out employing polymerization system (H) in the same manner as in Example 8 except that solid product $(II)_{11}$ at a rate of 35 mg/hr, triethylaluminum in place of triisobutylaluminum, at a rate of 0.35 mmol/hr, hexane at a rate of 2l/hr, ethylene containing 3% by volume of butene-1 at a rate of 310 Nl/hr and hydrogen in a molar ratio of ethylene (containing butene) to hydrogen of 1:0.05 in the gas phase part of the first stage polymerization vessel were fed to the vessel, and the total pressure was adjusted to 20 kg/cm² (gauge).

Successively, a second stage polymerization was carried out employing polymerization system (L) in the same manner as in Example 8 except that ethylene at a rate of 300 Nl/hr and hydrogen in a molar ratio of ethylene (containing butene introduced at the first stage polymerization vessel) to hydrogen of 1:3.0 in the gas phase part of a second stage polymerization vessel were fed to the vessel at 85°C without adding fresh triethylaluminum and the total pressure was adjusted to 35 kg/cm² (gauge).

The above-mentioned multi-stage polymerization was continuously carried out for 150 hours. Operation was extremely stabilized. Without deashing and after drying, 111 kg of polyethylene powder were obtained. The polymer yield was 21,100 g-polymer/g-(II) · Hr and 106,000 g-polymer/mmol-Ti · Hr.

This polyethylene had a melt index of 0.30, a bulk density of 0.38, a density of 0.956 and a $\overline{M}_w/\overline{M}_n$ value of 6.

Bottle was prepared according to blow molding. Drawdown of parison was low; no melt fracture at the time of molding occurred; no sharkskin phenomenon was observed and the surface of molded product was very good; the weight of one molded product was 275 g, that is, sufficient; there was almost no uneven thickness; and the resistance to stress cracking ($F_{50}$ value) was 170 hours, that is, no problem was raised. Thus the bottle was practically useful.

Comparative example 19

A continuous multi-stage polymerization of ethylene was carried out in the same manner as in Example 11 except that ethylene containing 10% by volume of butene-1 was fed at a rate of 70 Nl/hr and hydrogen was fed so that the molecular ratio of ethylene (containing butene) to hydrogen in the gas phase part was adjusted to 1:0.002 to carry out a first stage polymerization under a total pressure of 10 kg/cm² (gauge), and then ethylene was fed at a rate of 540 Nl/hr and hydrogen was fed so that the molecular ratio of ethylene (containing butene)

to hydrogen in the gas phase part was adjusted to 1:1.7 to carry out a second stage polymerization under a total pressure of 40 kg/cm$^2$ (gauge). 109 Kg of polyethylene were obtained. This polyethylene had a melt index of 0.35 and a $\overline{M_w}/\overline{M_n}$ value of 12.

Bottle was prepared according to blow molding. Drawdown of parison was high; melt fracture occurred at the time of molding; the surface of molded product was bad; the weight of one molded product was 210 g, that is, insufficient; and there was observed an uneven thickness phenomenon to such an extent that the thickness of the molded product was partly very small. Thus the bottle was not practically useful.

Example 12

A continuous multi-stage polymerization (HL) of ethylene was carried out in the same manner as in Example 11 except that solid product $(II)_5$ obtained in Example 5, at a rate of 30 mg/hr, ethylene at a rate of 200 Nl/hr, and hydrogen in a molecular ratio of ethylene to hydrogen of 1:0.07 in the gas phase part of a first stage polymerization vessel were fed to the vessel to carry out a first stage polymerization under a total pressure of 15 kg/cm$^2$ (gauge) at 65°C, and then ethylene was fed at a rate of 200 Nl/hr and hydrogen was fed so that the molecular ratio of ethylene to hydrogen in the gas phase part was adjusted to 1:2.5 to carry out a second stage polymerization under a total pressure of 25 kg/cm$^2$ (gauge) at 90°C. 72 Kg of polyethylene were obtained. This polyethylene had a melt index of 0.25, a bulk density of 0.40, a density of 0.954 and a $\overline{M_w}/\overline{M_n}$ value of 24.

Bottle was prepared according to blow molding. The appearance did not raise any problem; almost no uneven thickness was observed; and the weight of one molded product was 260 g. Thus the bottle had practically sufficient performances.

**Claims**

1. A process for producing polyethylene by continuous multi-stage polymerization carried out in the presence of Ziegler catalyst, solvent and hydrogen and employing a plurality of polymerization vessels, characterized in that the process comprises:

polymerizing ethylene in a combination of polymerization steps (a) and (b) as defined as follows, in the presence of a catalyst obtained by reacting a trivalent metal halide with a divalent metal-containing compound which is a divalent metal hydroxide, oxide or carbonate or a composite compound containing one or more compounds or a hydrate of one or more divalent metal compounds, to obtain a solid product (I); preparing a mixture of this solid product (I) with a polysiloxane and a compound of a transition metal of group IV*a* or V*a* of the Periodic Table; reacting this mixture to obtain a solid product (II) comprising the supported transition metal compound; and combining this solid product (II) with an organoaluminium compound, to obtain the catalyst; the separate steps (a) and (b) being carried out in the sequence (a), (b) or (b), (a) and being:

a polymerization step (a) wherein ethylene in an amount of 30 to 80% of the total amount of ethylene fed in the multi-stage polymerization is polymerized in a saturated hydrocarbon solvent, in conditions where a gas phase is present in the upper part of the polymerization vessel, at a polymerization temperature of 50°C or higher and lower than 120°C, under a polymerization pressure of 5 to 70 kg/cm$^2$ (gauge), while hydrogen is fed in so that the molar ratio of ethylene to hydrogen in the gas phase in the upper part of the polymerization vessel is in the range of above 1:0.5 up to 1:6.0 (the polymerization system of this stage being referred to hereinafter as polymerization system (L); and

a polymerization step (b) wherein ethylene in an amount of 20 to 70% of the total amount of ethylene fed in said multi-stage polymerization is polymerized in a saturated hydrocarbon solvent, in conditions where a gas phase is present in the upper part of the polymerization vessel, at a polymerization temperature of 30° to 100°C, under a polymerization pressure of 5 to 70 kg/cm$^2$ (gauge), while hydrogen is fed so that the molar ratio of ethylene to hydrogen in the gas phase in the upper part of the polymerization vessel in the range of 1:0.001 to 1:0.5 (the polymerization system of this stage being referred to hereinafter as polymerization system H).

2. A process according to claim 1, wherein the first stage polymerization is carried out employing said polymerization system (L) to prepare a lower molecular weight ethylene polymer; after completion of the first stage polymerization, the polymer suspended in the solvent is led to a lower pressure zone of 0.1 to 30 kg/cm$^2$ (gauge) and at least a portion of hydrogen and unreacted monomer dissolved in the solvent is separated; at least a portion of the thus separated hydrogen and unreacted monomer is returned to the polymerization system (L) of the first stage; and the second stage polymerization is carried out by feeding the suspended polymer to the polymerization system (H) to prepare a higher molecular weight ethylene polymer.

3. A process according to claim 1, wherein the first stage polymerization is carried out employing the polymerization system (H) to prepare a higher molecular weight ethylene polymer; and then the polymer suspended in the solvent is transferred to the polymerization system (L) and the second stage polymerization is carried out to prepare a lower molecular weight ethylene polymer.

4. A process according to claim 1, wherein the ethylene fed to the polymerization system (L) and/or the polymerization system (H) contains 10 mol % or less relative to the ethylene of one or more $\alpha$-olefins or dienes copolymerizable with ethylene.

5. A process according to any of claims 1 to 4, wherein the solid product (II) is prepared employing 20 to 1,000 g of polysiloxane and 10 to 500 g of transition metal compound, both based on 100 g of the solid product (I), the transition metal compound being employed in an amount of 30 to 500 g based on 100 g of the polysiloxane.

6. Extrusion moulded or blow moulded polyethylene articles produced from polyethylene prepared by a process according to any preceding claim.

**Patentansprüche**

1. Verfahren zum Herstellen von Polyäthylen durch kontinuierliche Mehrstufen-Polymerisation, die in Anwesenheit des Ziegler-Katalysators, Lösungsmittel und Wasserstoff durchgeführt wird und unter Benutzung mehrerer Polymerisationskessel, dadurch gekennzeichnet, daß das Verfahren folgende Schritte enthält:

Polymerisieren von Äthylen in einer Kombination aus Polymerisationsschritten (a) und (b), wie sie nachfolgend definiert sind, in Anwesenheit enes Katalysators, der durch Reaktion eines trivalenten Metallhalogenids mit einer ein divalentes Metall enthaltenden Verbindung erhalten wird, wobei die letztgennante Verbindung ein divalentes Metallhydroxid, -oxid oder -carbonat oder eine zusammengesetzte Verbindung mit einer oder mehreren Verbindungen oder einem Hydrat aus einer oder mehreren divalenten Metallverbindungen ist, um ein festes Produkt (I) zu erhalten; Bereitung einer Mischung dieses festen Produktes (I) mit einem Polysiloxan und einer Verbindung eines Übergangmetalles der Gruppe IV*a* oder V*a* des Perioden-systems; Reagieren dieser Mischung, um ein festes Produkt (II) zu erhalten, das die angelagerte Übergangsmetallverbindung enthält; und Kombinieren dieses festen Produktes (II) mit einer Organoaluminiumverbindung, um den Katalysator zu erhalten; wobei die getrennten Schritte (a) und (b) in der Reihenfolge (a), (b), (a) ausgeführt werden und wie folgt sind:

ein Polymerisationsschritt (a), bei dem Äthylen in einer Menge von 30 bis 80% des der Mehrstufenpolymerisation zugeführten Gesamtmenge an Äthylen in einem gesättigten Kohlenwasserstoff-Lösungsmittel polymerisiert wird, derart, daß im oberen Teil des Polymerisationskessels ein Gasphase präsent ist, und zwar bei einer Polymerisationstemperatur von 50°C oder höher und unterhalb 120°C, bei einem Polymerisationsdruck von 5 bis 70 kg/cm² (Messung), während Wasserstoff zugeführt wird, so daß das molare Verhältnis des Äthylens zum Wasserstoff in der Gasphase im oberen Bereich des Polymerisationkessels im Bereich oberhalb von 1:0,5 bis 1:6,0 liegt (das Polymerisationssystem dieser Stufe wird nachfolgend als Polymerisationssystem (L) bezeichnet); und

ein Polymerisationsschritt (b), bei dem Äthylen in einer Menge von 20 bis 70% des der Mehrstufenpolymerisation zugeführten Gesamtmenge an Äthylen in einem gesattigten Kohlenwasserstoff - Lösungsmittel polymerisiert wird, derart, daß eine Gasphase im oberen Bereich des Polymerisationskessels präsent ist, bei einer Polymerisationstemperatur von 30°C bis 100°C, unter einem Polymerisationsdruck von 5 bis 70 kg/cm² (Messung), während Wasserstoff zugeführt wird, so daß das molare Verhältnis des Äthylens zum Wasserstoff in der Gasphase im oberen Bereich des Polymerisationskessels im Bereich von 1:0,001 bis 1:0,5 leigt (das Polymerisationssystem dieser Stufe wird nachfolgend als Polymerisationssystem H bezeichnet).

2. Verfahren nach Anspruch 1, dadurch gekennzeichnet, daß die erste Polymerisationsstufe unter Verwendung des Polymerisationssystems (L) durchgeführt wird, um ein Äthylen-Polymer mit niedrigerem Molekulargewicht herzustellen; daß nach Vervollständigung der ersten Polymerisationsstufe das im Lösungsmittel schwebende Polymer in eine niedrigere Druckzone von 0,1 bis 30 kg/cm² (Messung) geleitet wird und zumindest ein Teil des Wasserstoffes und des nicht reagierten im Lösungsmittel aufgelösten Monomers abgeschieden wird; zumindest ein Teil des so abgeschiedenen Wasserstoffes und nicht reagierten Monomers wird in das Polymerisationssystem (L) der ersten Stufe zurückgeführt; und die zweite Polymerisationsstufe wird durch Einleitung des schwebenden Polymers in das Polymerisationssystem (H) durchgeführt, um ein Äthylen-Polymer mit einem Höheren Molekulargewicht zu erzeugen.

3. Verfahren nach Anspruch 1, dadurch gekennzeichnet, daß die erste Polymerisationsstufe unter Verwendung des Polymerisationssystems (H) durchgeführt wird, um ein Äthylen-Polymer mit höherem Molekulargewicht herzustellen; und daß dann das im Lösungsmittel schwebende Polymer in das Polymerisationssystem (L) überführt wird und die zweite Polymerisationsstufe zur Gewinnung eines Äthylen-Polymers mit niedrigerem Molekulargewicht durchgeführt wird.

4. Verfahren nach Anspruch 1, dadurch gekennzeichnet, daß das in das Polymerisationssystem (L) und/oder das Polymerisationssystem (H) eingeführte Äthylen 10 Mol-% oder weniger—bezogen auf das Äthylen—eines oder mehrerer $\alpha$-Olefine oder Diene enthält, die mit Äthylen copolymerisierbar sind.

5. Verfahren nach einem der Ansprüche 1 bis 4, dadurch gekennzeichnet, daß das feste Produkt (II) aus 20 bis 1000 g Polysiloxan und 10 bis 500 g Übergangsmetallverbindung, jeweils bezogen auf 100 g des festen Produktes (I) hergestellt wird, wobei die Übergangsmetallverbindung in einer Menge von 30 bis 500 g bezogen auf 100 g des Polysiloxan angewendet wird.

6. Extrudierte oder blasgeformte Polyäthylen-Gegenstände, dadurch gekennzeichnet, daß sie aus Polyäthylen bestehen, das durch ein Verfahren nach einem der vorangegangenen Ansprüche hergestellt ist.

**Revendications**

1. Un procédé de préparation de polyéthylène par un procédé continu de polymérisation en plusieurs étapes effectué en présence de catalyseur Ziegler, de solvant et d'hydrogène et en employant plusieurs récipients de polymérisation, caractérisé en ce que le procédé comprend les étapes de:

polymérisation d'éthylène en combinant les étapes de polymérisation (a) et (b) comme défini comme suit, en présence d'un catalyseur obtenu par réaction d'un halogénure de métal trivalent avec un composé contenant un métal divalent qui est un hydroxyde, un oxyde ou un carbonate de métal divalent ou un composé composite contenant un ou plusieurs composés ou un hydrate d'un ou plusieurs composés de métal divalent, pour obtenir un produit solide (I); préparation d'un mélange de ce produit solide (I) avec un polysiloxane et un composé de métal de transition du groupe IV*a* ou V*a* du tableau périodique; réaction de ce mélange pour obtenir un produit solide (II) comprenant le composé de métal de transition supporté; et combinaison de ce produit solide (II) avec un composé organoaluminium pour obtenir le catalyseur; les étapes séparées (a) et (b) étant effectués dans l'ordre (a), (b) ou (b), (a) et étant:

une étape de polymérisation (a) dans laquelle de l'éthylène, dans une quantité de 30 à 80% de la quantité totale d'éthylène fourni das le procédé de polymérisation en plusieurs étapes, est polymérisé dans un solvant hydrocarboné saturé, dans des conditions dans lesquelles und phase gazeuse est présente fans la partie supérieure du récipient de polymérisation, à une température de polymérisation de 50°C ou plus et inférieure à 120°C, sous une pression de polymérisation de 5 à 70 kg/cm² (jauge), tandis que de l'hydrogène est fourni de telle façon que la rapport molaire éthylène à hydrogène dans la phase gazeuse dans la partie supérieure de récipient de polymérisation soit compris entre 1/0,5 et 1/6,0 (le système de polymérisation de cetee étape étant désigné ci-après comme système de polymérisation (L)); et

une étape de polymérisation (b) dans laquelle de l'éthylène, dans une quantité de 20 à 70% de la quantité totale d'éthylène fourni dans ledit procédé de polymérisation en plusieurs étapes, est polymérisé dans un solvant hydrocarboné saturé, dans des conditions dans lesquelles une phase gazeuse est présente dans la partie supérieure du récipient de polymérisation, à une température de polymérisation de 30° à 100°C, sous une pression de polymérisation de 5 à 70 kg/cm² (jauge), tandis que de l'hydrogène est fourni de telle façon que la rapport molaire éthylène à hydrogène dans la phase gazeuse dans la partie supérieure du récipient de polymérisation soit dans l'intervalle de 1/0,001 à 1/0,5 (le système de polymérisation de cette étape étant désigné ci-après comme système de polymérisation (H)).

2. Un procédé selon la revendication 1, dans lequel la polymérisation de première étape est effectuée en employant ledit système de polymérisation (L) pour préparer un polymère éthylène à poids moléculaire plus faible; après la fin de la polymérisation de première étape, le polymère en suspension dans le solvant est conduit à une zone de plus basse pression de 0,1 à 30 kg/cm² (jauge) et une partie au moins de l'hydrogène et du monomère n'ayant pas réagi dissous dans le solvant est séparée; une partie au moins de l'hydrogène et du monomère n'ayant pas réagi ainsi séparés est renvoyée au système de polymèrisation (L) de la première étape; et le polymérisation de seconde étape est effectuée en alimentant en polymère en suspension le système de polymérisation (H) pour préparer un polymère éthylène à poids moléculaire plus élevé.

3. Un procédé selon la revendication 1, dans lequel la polymérisation de première étape est effectuée en employant le système de polymérisation (H) pour préparer un polymère éthylène à poids moléculaire plus élevé; et ensuite, le polymère en suspension dans le solvant est transféré au système de polymérisation (L) et la polymérisation de seconde étape est effectuée pour préparer un polymère éthylène à poids moléculaire plus faible.

4. Un procédé selon la revendication 1, dans lequel l'éthylène fourni au système de polymérisation (L) et/ou au système de polymérisation (H) contient 10 moles % ou moins, par rapport à l'éthylène, d'une ou plusieurs $\alpha$-oléfines ou diènes copolymérisables avec de l'éthylène.

5. Un procédé selon l'une des revendications 1 à 4, dans lequel le produit solide (II) est préparé en employant 20 à 1000 g de polysiloxane et 10 à 500 g de composé de métal de transition, les deux par rapport à 100 g du produit solide (I), le composé de métal de transition étant employé dans une quantité de 30 à 500 g pour 100 g de polysiloxane.

6. Des articles en polyéthylène moulés par extrusion ou moulés par soufflage préparés par un procédé selon l'une des revendications précédentes.